# EUROPÄISCHE PATENTANMELDUNG

(11) **EP 2 063 165 A1**
(43) Veröffentlichungstag der Anmeldung: **27.05.2009**
(21) Anmeldenummer: 07022785.5
(22) Anmeldetag: 23.11.2007
(51) Int. Cl.: F16P 1/02, B23Q 11/08

(54) **Vorrichtung zur Pendelbearbeitung von Werkstücken**

(71) Anmelder: Weeke Bohrsysteme GmbH, 33442 Herzebrock-Clarholz (DE)
(72) Erfinder: Voss, Hugo, 33449 Langenberg (DE); Heimann, Reinhard, 33332 Gütersloh (DE)
(74) Vertreter: HOFFMANN EITLE

(57) **Zusammenfassung**

Die Erfindung betrifft eine Vorrichtung (1) zur Pendelbearbeitung von Werkstücken (2), die bevorzugt zumindest abschnittsweise aus Holz, Holzwerkstoffen, Kunststoff oder dergleichen bestehen, umfassend eine Werkstückauflage (4) zur Auflegen der zu bearbeitenden Werkstücke (2), ein in Bezug auf die Werkstückauflage (4) verfahrbares Bearbeitungsaggregat (6) zum bevorzugt spandenden Bearbeiten der Werkstücke (2), und eine Schutzkabine zum Schützen von Bedienpersonen während des Betriebes der Vorrichtung, **dadurch gekennzeichnet, dass** die Schutzkabine eine erste Schutzeinrichtung (10) aufweist, welche zumindest die Werkstückauflage (4) umgibt und mindestens ein erstes Schutzelement (12) aufweist, das derart verfahrbar ist, um Zugang in den Bereich innerhalb der ersten Schutzeinrichtung (10) zu ermöglichen, und die Schutzkabine eine zweite Schutzeinrichtung (20) aufweist, welche in einer Draufsicht innerhalb der ersten Schutzeinrichtung (10) vorgesehen ist und mindestens ein zweites Schutzelement (22, 24) aufweist, das verfahrbar ist.

## Beschreibung

### Technisches Gebiet

Die Erfindung betrifft eine Vorrichtung zur Pendelbearbeitung von Werkstücken, die bevorzugt zumindest abschnittsweise aus Holz, Holzwerkstoffen, Kunststoff oder dergleichen bestehen, nach dem Oberbegriff von Anspruch 1.

### Stand der Technik

Unter Pendelbearbeitung von Werkstücken versteht man, dass ein Werkstück auf einer Auflage einer Bearbeitungsmaschine (z.B. eines Bearbeitungszentrums, BAZ) positioniert wird, das Werkstück in einem seinen Abmessungen entsprechenden Bereich der Auflage bearbeitet wird, während ein weiteres Werkstück gleichzeitig von einer Bedienperson oder automatisch auf einem nicht von dem Werkzeug der Bearbeitungsmaschine zur Bearbeitung eingenommenen Teil der Auflage gerüstet (aufgelegt und vorbereitet) werden kann. Nach Beenden der Bearbeitung des ersten Werkstücks fährt das Werkzeug dann zum weiteren Werkstück und bearbeitet dieses, während das erste Werkstück nun von der Auflage abgenommen und ein neues Werkstück aufgelegt werden kann. Danach beginnt der Zyklus wieder von vorn, so dass das Bearbeitungswerkzeug sozusagen zwischen den Werkstücken hin- und herpendelt und jeweils ein Werkstück von einer Bedienperson oder automatisch gehandhabt werden kann.

Um den Sicherheitsvorschriften zu genügen, muss bei Bearbeitungsmaschinen zur Pendelbearbeitung ein Schutzmechanismus vorgesehen werden, der verhindert, dass das Bedienpersonal in den Arbeitsbereich des Werkzeugs, z.B. einer rotierenden Bohrspindel, geraten und sich verletzen könnte. Hierzu werden herkömmlicherweise neben Umzäunungen, welche die gesamte Maschine umgeben, im Falle einer Rüstung über Bedienpersonen vor der Maschinenvorderseite platzierte Schaltmatten verwendet, deren Schaltung den unterschiedlichen und variablen Bearbeitungszuständen der Bereiche der Auflage entspricht. Diese besitzen jedoch den Nachteil, dass einerseits nur Werkstücke bis zu einer geringeren Maximalgröße im Vergleich zur Größe der Auflage bearbeitet werden können, und dass andererseits selbst bei kleinen Werkstücken der von den festen Schaltmatten, insbesondere der immer aktiven Schaltmatte, definierte Schutzbereich nicht verkleinert werden kann, um mehr Platz für die Rüstung durch Bedienpersonal zur Verfügung zu stellen. Des Weiteren ist eine den Sicherheitsvorschriften entsprechende Schaltung der Matten relativ aufwendig und somit teuer.

Darüber hinaus offenbart die EP 1 840 448 A1 eine Vorrichtung zur Pendelbearbeitung nach dem Oberbegriff von Anspruch 1. Diese weist eine variable Schutzkabine auf, deren Schutzbereich auf der Grundlage der jeweiligen Bearbeitungsbereiche der Werkstücke eingestellt wird. Obgleich sich diese Vorrichtung bewährt hat, besteht Verbesserungsbedarf. So erfordert die Vorrichtung eine relativ aufwändige Konstruktion, da alle Teile der variablen Schutzkabine verfahrbar sind. Ferner besteht durch die Verfahrbarkeit der variablen Schutzkabine eine Verletzungsgefahr bzw. es müssen zusätzliche Sicherheitsmaßnahmen getroffen werden. Diese können wiederum dazu führen, dass eine Bedienperson unerwünscht den Betrieb der Vorrichtung unterbricht, z. B. durch Betreten zusätzlicher Schaltmatten. Schließlich weist die variable Schutzkabine im Bereich der Werkstückauflage flexible Streifen auf, um ein Überfahren von auf der Werkstückauflage positionierten Werkstücken zu ermöglichen. Diese können jedoch ebenfalls eine Gefahr für die Bedienperson darstellen, da die flexiblen Streifen insbesondere bei einem Werkzeugbruch keinen ausreichenden Schutz vor aus dem Bearbeitungsbereich herausgeschleuderten Spänen, Werkzeugteilen, etc. bieten.

### Darstellung der Erfindung

Der Erfindung liegt daher die Aufgabe zugrunde, eine Vorrichtung zu Pendelbearbeitung von Werkstücken der eingangs genannten Art bereitzustellen, die bei einfacher Konstruktion eine erhöhte Sicherheit und einen störungsfreien Betrieb der Vorrichtung ermöglicht.

Diese Aufgabe wird erfindungsgemäß durch eine Vorrichtung zu Pendelbearbeitung von Werkstücken nach Anspruch 1 gelöst. Besonders bevorzugte Weiterbildungen der Erfindung sind in den abhängigen Ansprüchen angegeben.

Der Erfindung liegt der Gedanke zugrunde, den Zugang zu der Werkstückauflage einerseits und den Zugang zu dem Bearbeitungsaggregat andererseits zu entkoppeln bzw. zu staffeln. Zu diesem Zweck ist erfindungsgemäß vorgesehen, dass bei einer gattungsgemäßen Vorrichtung zur Pendelbearbeitung von Werkstücken die Schutzkabine eine erste Schutzeinrichtung aufweist, welche zumindest die Werkstückauflage umgibt und mindestens ein erstes Schutzelement aufweist, das derart verfahrbar ist, um Zugang in den Bereich innerhalb der ersten Schutzeinrichtung zu ermöglichen, und die Schutzkabine eine zweite Schutzeinrichtung aufweist, welche in einer Draufsicht innerhalb der ersten Schutzeinrichtung vorgesehen ist und mindestens ein zweites Schutzelement aufweist, das verfahrbar ist.

Auf diese Weise können völlig neue Sicherheitskonzepte realisiert werden, die bei einfacher Konstruktion eine erhöhte Sicherheit und gleichzeitig einen störungsfreien Maschinenbetrieb ermöglichen. So kann die erste Schutzeinrichtung beispielsweise dafür sorgen, dass bei einem Übergang der Bearbeitung eines ersten Werkstück zu einem zweiten Werkstück keine Kollision mit einer Bedienperson stattfinden kann, so dass der Übergang (Pendelvorgang) sicher und zügig stattfinden kann. Darüber hinaus kann die zweite Schutzeinrichtung sicherstellen, dass eine Bedienperson sicher in den Bereich innerhalb der ersten Schutzeinrichtung eintreten und Werkstücke auf die Werkstückauflage legen oder von dieser entnehmen kann, während gleichzeitig ein durch die zweite Schutzeinrichtung abgesicherter Bearbeitungsbetrieb an einem anderen Werkstück auf der Werkstückauflage stattfinden kann.

Es ist zu beachten, dass das Sicherheitskonzept der erfindungsgemäßen Vorrichtung auch auf andere Weise ausgestaltet sein kann.

Gemäß einer Weiterbildung der Erfindung ist vorgesehen, dass das mindestens eine erste Schutzelement und das mindestens eine zweite Schutzelement unabhängig voneinander verfahrbar sind. Hierdurch wird auf besonders wirksame Weise ein gestaffeltes Sicherheitskonzept ermöglicht, bei welchem der ersten und der zweiten Schutzeinrichtung unterschiedliche Sicherheitsaufgaben zukommen, die unabhängig voneinander gesteuert werden können, beispielsweise wie es vorstehend beschrieben wurde.

Gemäß einer Weiterbildung der Erfindung ist ferner vorgesehen, dass die erste Schutzeinrichtung mindestens zwei erste Schutzelement aufweist, die unabhängig von einander derart verfahrbar sind, um Zugang in dem Bereich innerhalb der ersten Schutzeinrichtung zu ermöglichen. Auf diese Weise wird erreicht, dass die erste Schutzeinrichtung Zugang zu unterschiedlichen Bereichen innerhalb der ersten Schutzeinrichtung gewähren bzw. behindern kann, beispielsweise zu einer ersten und zu einer zweiten Seite der Werkstücksauflage, die beispielsweise auf gegenüberliegenden Seiten des Bearbeitungsaggregats gelegen sein können.

Darüber hinaus ist gemäß einer Weiterbildung der Erfindung vorgesehen, dass die erste Schutzeinrichtung mindestens zwei erste Schutzelemente aufweist, die in eine einander zumindest teilweise überlappende Stellung verfahrbar sind. Hierdurch erzielt man einen geringen Platzbedarf der erfindungsgemäßen Vorrichtung, da es beispielsweise nicht erforderlich ist, Schutzelemente aus dem Bereich der ersten Schutzeinrichtung herauszufahren, um Zugang zum Inneren der ersten Schutzeinrichtung zu gewähren.

Im Hinblick auf eine wirksame und variable Schutzwirkung der zweiten Schutzeinrichtung ist gemäß einer Weiterbildung der Erfindung vorgesehen, dass diese mindestens zwei zweite Schutzelemente aufweist, die auf gegenüberliegenden Seiten des Bearbeitungsaggregats angeordnet sind. Dabei ist es besonders bevorzugt, dass die mindestens zwei weiten Schutzelemente unabhängig voneinander verfahrbar sind. Hierdurch lässt sich der jeweilige, zu schützende Arbeitsbereich des Bearbeitungsaggregats variabel unter Berücksichtigung der Werkstückabmessungen oder sonstigen Anforderungen einstellen, und zwar bei maximalem Sicherheitsniveau.

Vor diesem Hintergrund ist gemäß einer Weiterbildung der Erfindung ferner vorgesehen, dass das mindestens eine zweite Schutzelement unabhängig vom Bearbeitungsaggregat verfahrbar ist, da sich hierdurch ebenfalls eine variable Einstellbarkeit des Bearbeitungsbereichs mit entsprechend vielfältigen Bearbeitungsmöglichkeiten ohne Abstriche beim Sicherheitsniveau ergibt.

Im Hinblick auf ein maximales Sicherheitsniveau ist gemäß einer Weiterbildung der Erfindung ferner vorgesehen, dass das mindestens eine zweite Schutzelement nur verfahrbar ist, wenn der Zugang in den Bereich innerhalb der ersten Schutzeinrichtung behindert ist. Hierdurch wird jegliche Kollision der zweiten Schutzeinrichtung mit einer Bedienperson verhindert, wodurch nicht nur das Sicherheitsniveau erhöht wird, sondern auch ein störungsfreier Betrieb der erfindungsgemäßen Vorrichtung mit hoher Pendelgeschwindigkeit sichergestellt wird.

Gemäß einer Weiterbildung der Erfindung ist ferner vorgesehen, dass zumindest eines der zweiten Schutzelemente einen verstellbaren Abschnitt aufweist, der in Richtung der Werkstückauflage verstellbar ist. Hierdurch kann ein problemloses Verfahren der zweiten Schutzelemente über auf der Werkstückauflage vorgesehen Werkstücke ausgeführt werden, während gleichzeitig ein Austreten von Gegenständen aus dem Bearbeitungsbereich an den zweiten Schutzelementen vorbei weitgehend ausgeschlossen ist, sodass die Sicherheit weiter erhöht wird.

Die Schutzelemente können im Rahmen der vorliegenden Erfindung aus vielfältigen Materialien hergestellt sein. Um jedoch eine Beobachtung des Bearbeitungsvorgangs mit entsprechender Sicherheit und entsprechenden Eingriffsmöglichkeiten sicherzustellen, ist gemäß einer Weiterbildung der Erfindung vorgesehen, dass zumindest eines der ersten und zweiten Schutzelemente zumindest abschnittsweise aus einem durchsichtigen Material besteht.

### Kurze Beschreibung der Zeichnungen

Fig. 1 zeigt schematisch eine Perspektivansicht einer Vorrichtung gemäß der vorliegenden Erfindung;

Fig. 2 zeigt schematisch eine weitere Perspektivansicht der in Fig. 1 gezeigten Vorrichtung.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

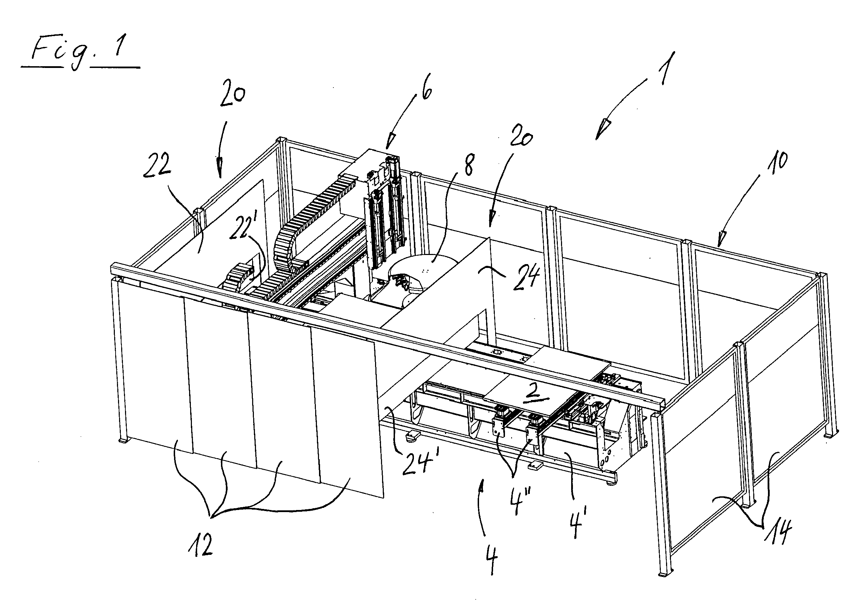

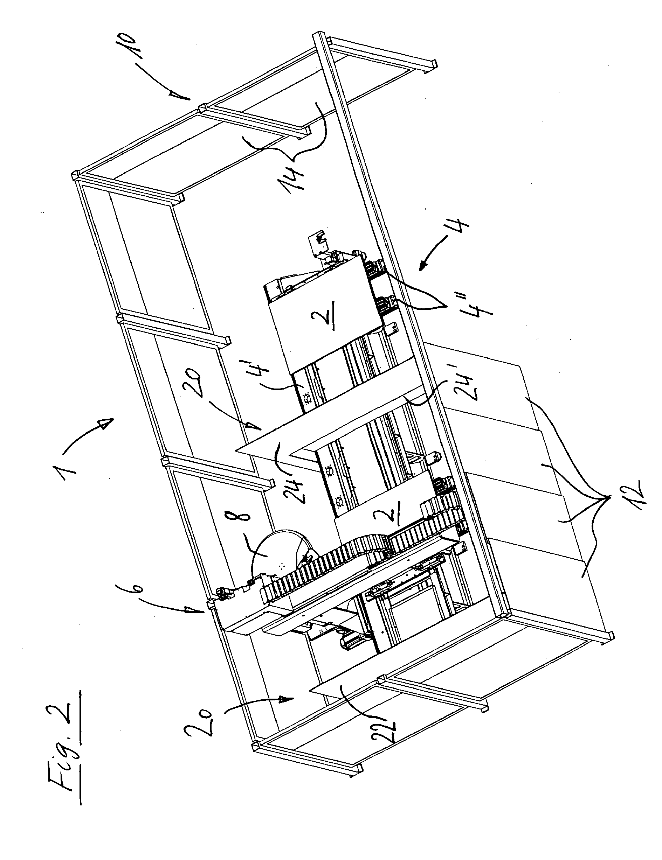

Eine Vorrichtung 1 zur Pendelbearbeitung an Werkstücken 2 als bevorzugte Ausführungsform der vorliegenden Erfindung ist in Fig. 1 und Fig. 2 jeweils in einer Perspektivansicht schematisch dargestellt. Die Vorrichtung 1 dient in der vorliegenden Ausführungsform zum Bearbeiten plattenförmmiger Werkstücke, die zumindest abschnittsweise aus Holz, Holzwerkstoffen, Kunststoff oder dergleichen bestehen, wie sie beispielsweise im Bereich der Möbel- oder Küchenindustrie häufig zum Einsatz kommen. Es ist jedoch zu beachten, dass die vorliegende Erfindung nicht auf diesen Anwendungsfall beschränkt ist.

Die in den Figuren 1 und 2 gezeigte Vorrichtung 1 besitzt zunächst eine Werkstückauflage 4 zum Auflegen der zu bearbeitenden Werkstücke 2, die in der vorliegenden Ausführungsform durch ein Maschinenbett 4' und mehrere darauf verfahrbar angeordnete Spannelemente 4" gebildet ist.

Oberhalb der Werkstückauflage 4 erstreckt sich ein Ausleger, an welchem ein Bearbeitungsaggregat 6 zum spanenden Bearbeiten der Werkstücke 2 verfahrbar angeordnet ist. Dabei ist die Verfahrbarkeit derart ausgestaltet, dass das Bearbeitungsaggregat 6 entlang des Auslegers sowie senkrecht zur Werkstückauflage 4 verfahrbar ist, während der Ausleger selbst wiederum entlang der Werkstückauflage 4 verfahrbar ist, sodass das Bearbeitungsaggregat 6 in insgesamt drei Achsrichtungen verfahrbar ist. Bei dem Bearbeitungsaggregat 6 kann es sich beispielsweise um eine Spindeleinheit handeln, die über ein Werkzeugmagazin 8 mit geeigneten Bearbeitungswerkzeugen oder Bearbeitungsaggregaten versorgt werden kann.

Ferner weist die Vorrichtung 1 eine Schutzeinrichtung 10 auf, die in der vorliegende Ausführungsform durch eine Mehrzahl von Schutzelementen 12 und 14 gebildet ist, welche die Werkstückauflage 4 umgeben. Die Schutzelemente 12, 14 sind an einer Stahlrohrkonstruktion gelagert, wobei die Schutzelemente 12 verfahrbar und die Schutzelemente 14 stationär angeordnet sind. Die Verfahrbarkeit der Schutzelemente 12 kann beispielsweise über einen geeigneten Riemenantrieb oder dergleichen erfolgen, wobei zumindest einige der Schutzelemente 12 unabhängig voneinander verfahren werden können. Dabei sind die Schutzelememnte 12 in den Figuren 1 und 2 in einer einander überlappenden Stellung gezeigt, von der aus sie in eine vollständig geschlossene Stellung gebracht werden können, in welcher der Zugang zu der Werkstückauflagefläche 4 vollständig behindert ist. Durch die unabhängige Verfahrbarkeit der Schutzelement 12 kann an einer beliebigen Stelle im Bereich der Schutzelemente 12 ein Zugang zum Inneren der ersten Schutzeinrichtung 10 geschaffen werden.

Obgleich in der vorliegenden Ausführungsform der gesamte Umfang der Werkstückauflage 4 durch Schutzelemente 12 bzw. 14 umschlossen ist, können diese gegebenenfalls auch bereichsweise durch Gebäudewände oder dergleichen gebildet sein. Ebenso ist es prinzipiell möglich, die verfahrbaren Schutzelemente 12 nicht an einer Längsseite, sondern an einer Querseite der ersten Schutzeinrichtung 10 anzuordnen.

In einer Draufsicht innerhalb der ersten Schutzeinrichtung 10 angeordnet ist eine zweite Schutzeinrichtung 20, die in der vorliegenden Ausführungsform zwei platten- bzw. scheibenförmige Schutzelemente und 24 aufweist. Die Schutzelemente 22 und 24 erstrecken sich dabei im Wesentlichen parallel zu dem Ausleger des Bearbeitungsaggregats 6 und sind auf gegenüberliegenden Seiten des Bearbeitungsaggregats 6 angeordnet. Ferner sind die Schutzelemente 22, 24 in der vorliegenden Ausführungsform mittels einer eigenen Führung entlang der Werkstückauflage 4 verfahrbar, und zwar unabhängig sowohl von dem Bearbeitungsaggregat 65 als auch von den Schutzelementen 12 der ersten Schutzeinrichtung 10.

Wie in Fig. 1 am besten zu erkennen ist, besitzen die Schutzelemente 22, 24 jeweils einen verstellbaren Abschnitt 22', 24', der in Richtung der Werkstückauflage 4 verstellbar ist, sodass je nach Stellung der verstellbaren Abschnitte 22', 24' ein unterschiedlich großer Spalt zwischen den Schutzelementen 22, 24 und der Werkstückauflage 4 eingestellt werden kann.

Sowohl die verfahrbaren Schutzelemente der ersten Schutzeinrichtung als auch die verfahrbaren Schutzelemente 22, 24 der zweiten Schutzeinrichtung 20 sind in der vorliegenden Ausführungsform aus einem durchsichtigen Material hergestellt, wie beispielsweise Sicherheitsglas, Sicherheitskunststoff wie Makrolon oder dergleichen.

Der Betrieb der erfindungsgemäßen Vorrichtung 1 vollzieht sich beispielsweise wie folgt. Ausgegangen wird von der in Fig. 1 gezeigten Situation, in der sich im linken Bereich von Fig. 1 ein Werkstück 2 in der Bearbeitung durch das Bearbeitungsaggregat 6 befindet. Der Zugang zu diesem Bearbeitungsbereich ist in Fig. 1 durch die Schutzelemente 12, 14 und 24 der ersten bzw. zweiten Schutzeinrichtung 10, 20 behindert. Demgegenüber ist der Zugang zu dem rechten Bearbeitungsbereich in Fig. 1 freigegeben, da die Schutzelemente 12 nach links in eine überlappende Stellung gefahren sind. In diesem Zustand stellt eine nicht näher gezeigte Steuereinrichtung sicher, dass das Schutzelement 24 nicht verfahren werden kann, sodass eine Bedienperson gefahrlos in den zweiten Bearbeitungsbereich eintreten kann, um dort ein Werkstück von der Werkstückauflage 4 zu entnehmen und ein neues, zu bearbeitendes Werkstück auf die Werkstückauflage 4 aufzulegen.

Sobald die Bedienperson den rechten Bearbeitungsbereich verlassen hat, werden die Schutzelemente 12 derart verfahren, dass der Zugang sowohl zum rechten als auch zum linken Bearbeitungsbereich behindert ist. Dabei kann das Verlassen des rechten Bearbeitungsbereichs durch die Bedienperson durch unterschiedliche Einrichtungen überwacht oder gegebenenfalls durch ein einfaches Drücken eines Bestätigungsknopfes durch die Bedienperson bestätigt werden.

Sobald der Bearbeitungsvorgang im linken Bearbeitungsbereich abgeschlossen ist, wird das Schutzelement 24 in Fig. 1 nach rechts verfahren um dem Bearbeitungsaggregat 6 den Zugang zu dem im rechten Bearbeitungsbereich vorgesehenen Werkstück zu ermöglichen. Dabei muss das Schutzelement 24 das Werkstück überfahren. Zu diesem Zweck wird der verstellbare Abschnitt 24' des Schutzelements 24 nach oben in eine zurückgezogene Stellung verfahren, sodass das Schutzelement 24 ohne Kollision über ein in dem rechten Bearbeitungsbereich vorgesehenes Werkstück 2 hinwegfahren kann. Anschließend kann der verstellbare Abschnitt 24' wieder heruntergefahren werden.

Simultan hierzu oder gegebenenfalls auch zeitversetzt werden das Bearbeitungsaggregat 6 und das Schutzelement 22 ebenfalls in Fig. 1 nach rechts verfahren. Dabei wird beim Schutzelement 22 ebenfalls der verstellbare Abschnitt 22' vorübergehend eingezogen, um ein kollisionsfreies Überfahren der im linken Bearbeitungsbereich vorgesehenen Werkstückspanner sicherzustellen. Dabei wird das Schutzelement 22 in eine Position verfahren, die durch den benötigten Bearbeitungsraum des in dem rechten Bearbeitungsbereich vorgesehenen Werkstücks definiert ist. Nun kann auch beim Schutzelement 22 der verstellbare Abschnitt 22' heruntergefahren werden, sodass keine Gegenstände aus dem rechten Bearbeitungsbereich im Zuge der Bearbeitung herausgeschleudert werden können.

Nun können eines oder mehrere Schutzelemente 12 von links nach rechts verfahren werden, um der Bedienperson den Zugang zu dem linken Bearbeitungsbereich zu ermöglichen, sodass die Bedienperson das fertig bearbeitete Werkstück entnehmen und ein neues, zu bearbeitendes Werkstück auf die Werkstückauflage 4 auflegen kann. Von hier ausgehend wiederholt sich der oben beschriebene Vorgang entsprechend.

## Patentansprüche

1. Vorrichtung (1) zur Pendelbearbeitung von Werkstücken (2), die bevorzugt zumindest abschnittsweise aus Holz, Holzwerkstoffen, Kunststoff oder dergleichen bestehen, umfassend
eine Werkstückauflage (4) zum Auflegen der zu bearbeitenden Werkstücke (2),
ein in Bezug auf die Werkstückauflage (4) verfahrbares Bearbeitungsaggregat (6) zum bevorzugt spandenden Bearbeiten der Werkstücke (2), und
eine Schutzkabine zum Schützen von Bedienpersonen während des Betriebes der Vorrichtung,
**dadurch gekennzeichnet, dass**
die Schutzkabine eine erste Schutzeinrichtung (10) aufweist, welche zumindest die Werkstückauflage (4) umgibt und mindestens ein erstes Schutzelement (12) aufweist, das derart verfahrbar ist, um Zugang in den Bereich innerhalb der ersten Schutzeinrichtung (10) zu ermöglichen, und
die Schutzkabine eine zweite Schutzeinrichtung (20) aufweist, welche in einer Draufsicht innerhalb der ersten Schutzeinrichtung (10) vorgesehen ist und mindestens ein zweites Schutzelement (22, 24) aufweist, das verfahrbar ist.

2. Vorrichtung nach Anspruch 1, **dadurch gekennzeichnet, dass** das mindestens eine erste Schutzelement (12) und das mindestens eine zweite Schutzelement (22, 24) unabhängig voneinander verfahrbar sind.

3. Vorrichtung nach Anspruch 1 oder 2, **dadurch gekennzeichnet, ]dass** die erste Schutzeinrichtung (10) mindestens zwei erste Schutzelemente (12) aufweist, die unabhängig voneinander derart verfahrbar sind, um Zugang in den Bereich innerhalb der ersten Schutzeinrichtung (10) zu ermöglichen.

4. Vorrichtung nach einem der vorhergehenden Ansprüche, **dadurch gekennzeichnet, dass** die erste Schutzeinrichtung (10) mindestens zwei erste Schutzelemente (12) aufweist, die in einer einander zumindest teilweise überlappende Stellung verfahrbar sind.

5. Vorrichtung nach einem der vorhergehenden Ansprüche, **dadurch gekennzeichnet, dass** die zweite Schutzeinrichtung (20) mindestens zwei zweite Schutzelemente (22, 24) aufweist, die auf gegenüberliegenden Seiten des Bearbeitungsaggregats (6) angeordnet sind.

6. Vorrichtung nach Anspruch 5, **dadurch gekennzeichnet, dass** die mindestens zwei zweiten Schutzelemente (22, 24) unabhängig voneinander verfahrbar sind.

7. Vorrichtung nach einem der vorhergehenden Ansprüche, **dadurch gekennzeichnet, dass** das mindestens eine zweite Schutzelement (22, 24) unabhängig von Bearbeitungsaggregat (6) verfahrbar ist.

8. Vorrichtung nach einem der vorhergehenden Ansprüche, **dadurch gekennzeichnet, dass** das mindestens eine zweite Schutzelement (22, 24) nur verfahrbar ist, wenn der Zugang in den Bereich innerhalb der ersten Schutzeinrichtung (10) behindert ist.

9. Vorrichtung nach einem der vorhergehenden Ansprüche, **dadurch gekennzeichnet, dass** zumindest eines der zweiten Schutzelemente (22, 24) einen verstellbaren Abschnitt aufweist (22', 24'), der in Richtung der Werkstückauflage (4) verstellbar ist.

10. Vorrichtung nach einem der vorhergehenden Ansprüche, **dadurch gekennzeichnet, dass** zumindest eines der ersten und zweiten Schutzelemente (12, 22, 24) zumindest abschnittsweise aus einem durchsichtigen Material besteht.
